# EUROPEAN PATENT APPLICATION

(11) **EP 4 848 139 A1**
(43) Date of publication of application: **02.12.2026**
(21) Application number: 25305777.2
(22) Date of filing: 28.05.2025
(51) Int. Cl.: G06K 19/077, B32B 7/00, B32B 27/00, C08L 77/00

(54) **DATA CARRIER COMPRISING PA11 POLYAMIDE LAYER**

(71) Applicant: THALES DIS FRANCE SAS, 92190 Meudon (FR)
(72) Inventor: CHEVREAU, Clara, 13004 Marseille (FR); VIALARD-SCARDIGLI, Camille, 13360 Roquevaire (FR); ODDOU, Laurent, 13390 Auriol (FR)
(74) Representative: Castelo, Jérôme

(57) **Abstract**

A data carrier intended to contain personal information of a user, the data carrier having a multilayer structure formed by lamination and comprising:
- a card body;
- at least one electronic module;
- at least one antenna;
wherein the card body comprises at least a first layer of PA11.

## Description

### TECHNICAL FIELD

The present invention relates to a data carrier according to claim 1 and to a method of producing a data carrier according to claim 11.

### PRIOR ART

Data carrier such as smart cards, including banking cards, identity cards, and access control cards, are traditionally manufactured using petrochemical-based plastics such as polyvinyl chloride (PVC), acrylonitrile butadiene styrene (ABS), and polyethylene terephthalate glycol (PET-G). While these materials offer good mechanical durability and processability, their environmental footprint have driven the search for more sustainable alternatives. Among the emerging bioplastics, polylactic acid (PLA) has gained significant attention as a bio-based material. PLA is a thermoplastic aliphatic polyester derived primarily from renewable resources such as corn starch, sugarcane, or cassava. Several card manufacturers have introduced PLA-based smart cards as part of their environmental sustainability strategies, particularly in the banking and hospitality sectors.

PLA-based smart cards exhibit certain advantages as they are sourced from renewable feedstocks, are industrially compostable under specific conditions, and can reduce dependence on fossil-derived polymers. PLA also emits fewer greenhouse gases during production and incineration compared to conventional plastics.

However, despite its promise, the use of PLA in smart cards presents numerous technical and environmental drawbacks, particularly when deployed in high-performance and long-lifespan applications such as financial cards. A first drawback is its lower mechanical durability. Indeed, PLA exhibits inferior impact resistance and tensile strength compared to traditional plastics, leading to faster wear or breakage under regular card usage conditions (e.g., bending, swiping, or thermal lamination).

PLA also shows moisture sensitivity as it is inherently hydrophilic, which makes it susceptible to moisture absorption. This adversely affects its dimensional stability, mechanical integrity, and adhesion performance, particularly in humid environments. Such sensitivity is critical when cards are embedded with chips or antenna layers that require precise tolerances and long-term adhesion.

PLA also involves temperature limitations as it begins to deform at relatively low temperatures (typically above 55°C), which is problematic for cards that may be exposed to elevated temperatures, such as being stored in a wallet inside a parked vehicle.

Due to the combined effects of hydrolysis, UV degradation, and lower structural integrity, PLA cards tend to have a reduced operational lifetime compared to conventional PVC or PET-G cards.

Another major drawback of the use of PLA relates to environmental concerns relating to its production. Indeed, industrial production of PLA from biomass feedstocks, especially corn and sugarcane, is water-intensive, both in crop cultivation and processing. Therefore, production of PLA involves high water consumption.

Furthermore, PLA manufacturing competes with agricultural land used for food production, raising concerns about food security, biodiversity, and land-use sustainability. The large-scale expansion of PLA production could exacerbate deforestation and increase the carbon footprint of the raw materials, undermining some of its ecological benefits.

As a result of these limitations, the use of PLA in smart cards remains a compromise between environmental branding and material performance. While some card issuers tolerate these limitations for marketing or short-duration applications, PLA is not suitable for broader adoption in durable, high-reliability cards, particularly in banking and government sectors where long-term stability is paramount.

There is therefore a need for a novel bio-sourced material suitable for smart card applications, which maintains the environmental benefits of PLA (renewable origin, low emissions) while addressing its shortcomings, especially with respect to moisture resistance, durability, thermal stability, and reduced environmental cost in terms of water and land use.

### SUMMARY OF THE INVENTION

It is an object of the present invention to overcome the drawbacks of the prior art. In particular, it is an object of the present invention to provide an optimized data carrier comprising a bio-based material.

This object is achieved with a data carrier according to claim 1. The invention is defined as being a data carrier having a multilayer structure formed by lamination. The data carrier comprises at least one electronic module and at least one antenna. The antenna and electronic module are incorporated in the card body according to well-known techniques from the state of the art. Non exhaustive list of such techniques can include coil-on-module, wire embedding (antenna embedding), printed antennas (using conductive inks), inlay or prelaminated inlays, flip-chip bonding, integrated circuit card (icc) module embedding, and so on.

The data carrier according to the invention comprises at least a first layer of polyamide 11 (PA11). PA11 is a high-performance, bio-based thermoplastic polymer derived from castor oil, a non-food, drought-resistant crop. PA11 is a 100% bio-sourced polyamide that belongs to the broader family of nylons. Unlike PLA, which is a polyester, PA11 presents superior mechanical and thermal properties.

While both PLA and PA11 are bio-based, PA11 exhibits significantly lower moisture absorption and is far more dimensionally stable in humid environments.

PA11 maintains its mechanical and adhesive properties under prolonged exposure to humidity, making it highly suitable for lamination with electronic components like antennas and chips.

PA11 represents a robust, sustainable alternative to PLA for use in smart cards and banking cards. It maintains the environmental advantages of being bio-sourced while resolving critical technical issues including poor moisture resistance, low durability, and short service life. Moreover, its non-food feedstock origin and low agricultural impact position it as a truly sustainable solution aligned with global efforts to reduce the environmental footprint of plastic-based consumer products.

Advantageously, the card body comprises at least 70% in mass of PA11. This ratio ensures that most of the material used to form the multilayer structure is PA11. This high ratio allows to fully benefit from the aforementioned advantages of this material in the multilayer structure.

The use of a new material in the manufacturing of data carrier with multilayer structure raises several technical challenges. The hot lamination process, in particular, imposes several demanding technical constraints on the materials used.

A first challenge is to ensure satisfactory adhesion between the different layers. This adhesion depends on several parameters such as the melting temperature of the materials of the multilayer structure and the lamination parameters. Due to its high metling temperature, which is around 180°C, the PA11 layer is not fully adapted for a lamination process at 130°C. Indeed, as the material does not reach its melting temperature it does not always properly bond to adjacent layers.

Preferably, the card body comprises an adhesive layer in direct contact with at least a first side of the at least first PA11 layer. In other words, the adhesive is directly adjacent to the PA11 layer. Such adhesive layer ensures proper adhesion of the PA11 layer to adjacent layer in order to limit or prevent any delamination of the multilayer structure of the data carrier.

The nature of the adhesive is another critical feature which depends on the nature of the material of the multilayer structure. Several adhesives have been tested by the applicant to properly adhere PA11 layers in the multilayer structure, especially with a lamination process at 130°C. Both polyolefin and polyurethane showed good results and prevent delamination. Advantageously, the adhesive layer comprises polyolefin and/or polyurethane.

The adhesive layers can be in contact of a single side of the PA11 layer. Preferably, the adhesive layers are in contact with both side of the PA11 layer.

Advantageously, the polyolefin adhesive is co-extruded with the PA11. Therefore, a pre-assembly of PA11 and polyolefin adhesive on one or each side of the PA11 layer is formed before the lamination step forming the data carrier multilayer structure.

Preferably, the polyurethane adhesive is printed on the PA11 layer. Therefore, a pre-assembly of PA11 and polyurethane adhesive on one or each side of the PA11 layer is formed before the lamination step forming the data carrier multilayer structure.

Another challenge is to get a total stiffness of the multilayer structure which conforms to standards. More particularly, multilayers smart cards have to present specific rigidity properties in order to respect some requirements.

The structural development and research done by the applicant shown that the rigidity of the PA11 alone is not optimal in the final multilayer structure. Several alternatives have been tested to achieve a satisfactory rigidity in the data carrier.

Advantageously, the PA11 layer comprises fibers or charges. Adding fibers to polymeric material, especially engineering polymers like PA11, allows to enhance mechanical performance and adapt the material to demanding applications. Several fiber types were tested in PA11 to achieve satisfactory mechanical behavior once the multilayer data carrier was formed. More or less satisfactory results were obtained depending on the type and quantity of fibers used.

In the case of too high fiber content in the PA11, drawback such as brittleness and poor processability can be observed. Preferably, the PA11 layer comprises less than 25% in mass of fibers or charges inside the PA11 layer.

Advantageously, the fibers or charges of the PA11 layer comprises glass fibers. Such nature of fibers gives significant improvement in term of rigidity and mechanical behavior of the multilayer structure of the data carrier. In particular, the processability of such PA11 layer with glass fiber appears to be compatible with machinery and lamination parameters of the already existing manufacturing sites of the applicant. Such specific material therefore allows to form multilayer structure showing satisfactory physical and mechanical behaviors without requiring completely new lamination process and machinery. The fibers or charges of the PA11 layer can also comprise talc.

Preferably, the PA11 layer comprises around 8% in mass of glass fibers. This specific percentage of glass fiber in PA11 appears to be a sweet spot in term of mechanical behavior of the multilayer structure of the data carrier.

Depending on the intended use and the customer requirements, the structure of the data carrier can be fine tuned in order to reach the desired thickness, rigidity and appearance. The thickness of the layers is one of the key feature in the development of the multilayer data carrier. The variations of the layer thickness and the number of layers can notably have a direct influence on the rigidity.

Advantageously, the tensile modulus of the data carrier is comprised between 2000-2500MPa. Such tensile modulus is considered a sweet spot in term of rigidity for the multilayer data carrier.

The number of PA11 layers in the multilayer structure can vary depending on the requirements in term of thickness and mechanical behavior of the data carrier. Preferably, the card body comprises at least a second layer of PA11. The card body can comprise three layers of PA11. The card body can comprise four layers of PA11. The card body can comprise five layers of PA11.

Advantageously, at least one of the PA11 layer has a thickness comprised between 40µm and 120µm. At least one of the PA11 layer preferably has a thickness comprised between 120µm and 220µm. At least one of the PA11 layer preferably has a thickness comprised between 220µm and 300µm. At least one of the PA11 layer preferably has a thickness comprised between 300µm and 400µm. At least one of the PA11 layer preferably has a thickness comprised between 600µm and 750µm. At least one of the PA11 layer preferably has a thickness comprised between 750µm and 850µm. The total or cumulated thickness of the PA11 layers is comprised between 500µm and 900µm.

The card body preferably comprises decorative layers such as ink layer.

The data carrier can comprise several other layers not explicitly disclosed herein. The number of PA layer in the data carrier is not limited to the specific embodiment described in the present disclosure.

According to another aspect, the invention concerns a secure article comprising or consisting of at least one data carrier as previously disclosed. The secure article is preferably is a smart card, more preferably a banking card.

According to yet another aspect, the invention concerns a method of producing a data carrier as previously disclosed. The method preferably comprises the steps of:
- providing a multilayer card body (10) formed by a stack of layers;
- providing at least one electronic module (20);
- providing at least one antenna (25);
- laminating the stack of layers to form the multilayer structure;
wherein the method comprises a step of providing at least a first layer of PA11.

Preferably, the lamination step is performed between 100 and 200°C, preferably between 120 and 140°C, more preferably at 130°C.

Advantageously, the method comprises a step of providing an adhesive layer in direct contact with at least a first side of the at least first PA11 layer, said adhesive comprising polyolefin and/or polyurethane.

Preferably, the adhesive is coextruded with the PA11 layer. More preferably, the adhesive coextruded with the PA11 layer is a polyolefin adhesive.

Advantageously, the adhesive is printed onto the PA11 layer. More advantageously, the adhesive is printed onto the PA11 layer is a polyurethane adhesive.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a data carrier according to the invention in a cross section view;
- Fig. 2: shows a second data carrier according to the invention in a cross section view;
- Fig. 3: shows a third data carrier according to the invention in a cross section view;
- Fig. 4: shows a fourth data carrier according to the invention in a cross section view;

### DESCRIPTION OF PARTICULAR EMBODIMENTS

Aspects of the invention shall be further illustrated with reference to the figures.

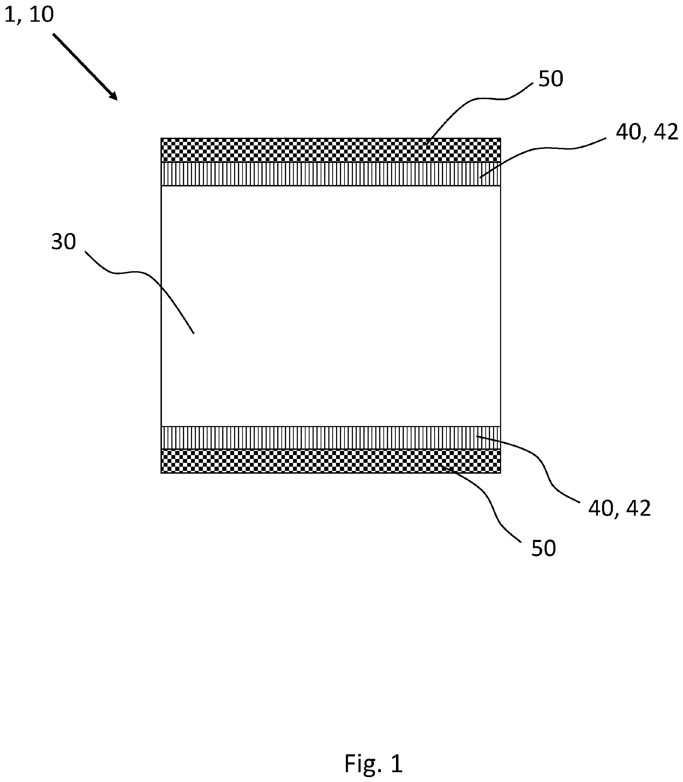

Figure 1 depicts a first data carrier 1 according to the invention in a cross-section view. The data carrier 1 comprises a card body 10, an electronic module 20 and an antenna 25. The electronic module 20 and the antenna 25 are not represented in the figures. The card body 10 comprises a first PA11 layer 30. The PA11 layer 30 has a thickness of 800µm. The card body 10 also comprises two adhesive layers 40. The adhesive layers 40 are in direct contact with both sides of the first PA11 layer 30. The adhesive layers 40 comprise polyolefin. The polyolefin adhesive layer 40 are co-extruded with the PA11. The card body 10 further comprises two ink layers 50. each ink layer is applied on the adhesive layers 40.

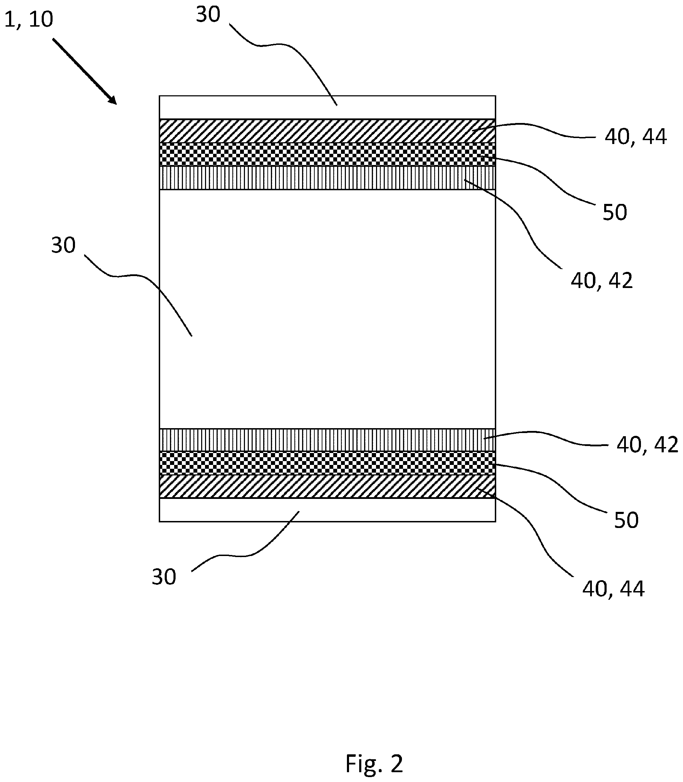

Figure 2 depicts a second data carrier 1 according to the invention in a cross-section view. The data carrier 1 comprises a card body 10, an electronic module 20 and an antenna 25. The electronic module 20 and the antenna 25 are not represented in the figures. The card body 10 comprises a first inner PA11 layer 30. The first inner PA11 layer 30 has a thickness of 680µm. The card body 10 comprises two adhesive layers 40 in direct contact with both sides of the first inner PA11 layer 30. The adhesive layers 40 comprise polyolefin. The polyolefin adhesive layer 42 are co-extruded with the PA11. The card body 10 further comprises two ink layers 50. Each ink layer is applied on the polyolefin adhesive layers 42. The card body 10 further comprises two outer PA11 layers 30. The two outer PA11 layers 30 have a thickness of 60µm.

Each of the outer PA11 layers are adhered to the ink layers 50 through an adhesive layer 40 comprising polyurethane. The polyurethane adhesive layers 44 are printed on the PA11 layers 30. A pre-assembly of PA11 and polyurethane adhesive on one side of the PA11 layer is formed before the lamination step forming the card body 10. The polyurethane adhesive layers 44 are located between the outer PA11 layers 30 and the ink layers 50.

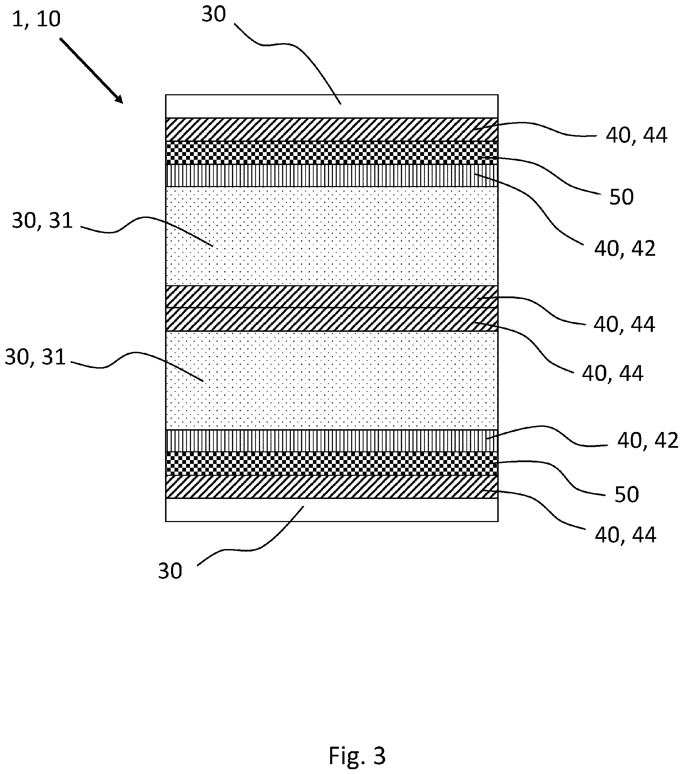

Figure 3 depicts a third data carrier 1 according to the invention in a cross-section view. The data carrier 1 comprises a card body 10, an electronic module 20 and an antenna 25. The electronic module 20 and the antenna 25 are not represented in the figures.

The card body 10 comprises two inner PA11 layers 30. The two inner PA11 layers 30 comprises 8% in mass of glass fibers 31. Each of the two inner PA11 layer 30 have a thickness of 340µm. One side of each of these two inner PA11 layers 30 are in direct contact with an adhesive layer 40 comprising polyolefin. The polyolefin adhesive layer 42 are co-extruded with the PA11 layer before the lamination step forming the card body 10. The two inner PA11 layers 30 are separated by two additional adhesive layers 40 which are in direct contact with the second side, facing the center of the card body 10, of the respective inner PA11 layers 30. These two adhesive layers 40 can comprise polyurethane and/or polyolefin. In the represented embodiment, these two adhesive layers 40 are polyurethane adhesive layers 44. The card body 10 further comprises two ink layers 50. Each ink layer is applied on the polyolefin adhesive layers 42. The card body 10 further comprises two outer PA11 layers 30. Each of the two inner PA11 layer 30 have a thickness of 60µm. Each of the outer PA11 layers 30 are adhered to the ink layers 50 through an adhesive layer 40 comprising polyurethane. The polyurethane adhesive layers 44 are printed on the PA11 layers 30. A pre-assembly of PA11 and polyurethane adhesive on one side of the PA11 layer is formed before the lamination step forming the card body 10. The polyurethane adhesive layers 44 are located between the outer PA11 layers 30 and the ink layers 50.

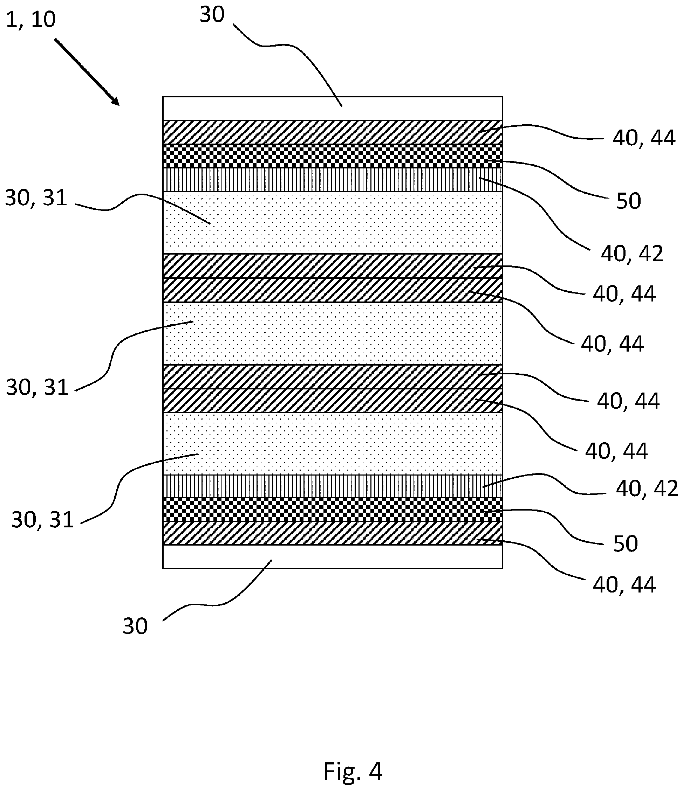

Figure 4 depicts a fourth data carrier 1 according to the invention in a cross-section view. The data carrier 1 comprises a card body 10, an electronic module 20 and an antenna 25. The electronic module 20 and the antenna 25 are not represented in the figures.

The card body 10 comprises three inner PA11 layers 30. The three inner PA11 layers 30 comprises 8% in mass of glass fibers 31. The central inner PA11 layer has a thickness of 180µm. The two other inner PA11 layers 30 have a thickness of 260µm each. Both side of the central inner PA 11 layer 30 is in contact with a polyolefin adhesive layer 44. The two other inner PA11 layers 30 are in contact with a polyolefin adhesive layer 44 on their side facing the central inner PA11 layer 30. Those are additional polyolefin adhesive layers 44 such that the central inner PA11 layer is separated from each of the two others inner PA11 layers 30 by two successive polyolefin adhesive layer 44. The adhesive layers 40 separating the inner PA11 layers 30 could comprise polyurethane and/or polyolefin, even though in the represented embodiment, these are polyurethane adhesive layers 44. The other side of these two inner PA11 layers 30 are in direct contact with a polyolefin adhesive layer 42. The card body 10 further comprises two ink layers 50. Each ink layer is applied on the polyolefin adhesive layers 42. The card body 10 further comprises two outer PA11 layers 30. Each of the two outer PA11 layer 30 have a thickness of 60µm. Each of the outer PA11 layers 30 are adhered to the ink layers 50 through a polyurethane adhesive layers 44. The polyurethane adhesive layers 44 are located between the outer PA11 layers 30 and the ink layers 50.

## Claims

1. A data carrier (1) intended to contain personal information of a user, the data carrier having a multilayer structure formed by lamination and comprising:
- a card body (10);
- at least one electronic module (20);
- at least one antenna (25);
wherein the card body (10) comprises at least a first layer of PA11 (30).

2. A data carrier (1) according to the previous claim, wherein the card body (10) comprises at least 70% in mass of PA11.

3. A data carrier (1) according to any of the previous claims, wherein the card body (10) comprises at least one adhesive layer (40) in direct contact with at least a first side of the at least first PA11 layer (30), said adhesive layer (40) comprising polyolefin and/or polyurethane.

4. A data carrier (1) according to claim 3, wherein the adhesive layers (40) are in contact with both side of the PA11 layer (30).

5. A data carrier (1) according to any of the previous claims, wherein the card body (10) comprises at least a second layer of PA11 (30).

6. A data carrier (1) according to any of the previous claims, wherein the PA11 layer (30) comprises fibers (31).

7. A data carrier (1) according to claim 6, wherein the PA11 layer (30) comprises less than 25% in mass of fibers (31).

8. A data carrier (1) according to claims 6 to 7, wherein the fibers (31) of the PA11 layer (30) comprises glass fibers.

9. A data carrier (1) according to claim 8, wherein the PA11 layer (30) comprises 8% in mass of glass fibers.

10. A data carrier (1) according to any of the previous claims, wherein the tensile modulus of the data carrier (1) is comprised between 2000-2500MPa.

11. A method for producing a data carrier (1) having a multilayer structure, preferably a data carrier (1) as claimed in any one of claims 1 to 10, wherein the method comprises the steps of:
- providing a multilayer card body (10) formed by a stack of layers;
- providing at least one electronic module (20);
- providing at least one antenna (25);
- laminating the stack of layers to form the multilayer structure;
wherein the method comprises a step of providing at least a first layer of PA11 (30).

12. A method according to claim 11, wherein the lamination step is performed between 120 and 140°C, preferably at 130°C.

13. A method according to claims 11 to 12, wherein it comprises a step of providing an adhesive layer (40) in direct contact with at least a first side of the at least first PA11 layer (30), said adhesive layer (40) comprising polyolefin and/or polyurethane.

14. A method according to claim 13, wherein the adhesive layer (40) is coextruded with the PA11 layer (30).

15. A method according to claim 13, wherein the adhesive layer (40) is printed onto the PA11 layer (30).
